(19) Europäisches Patentamt / European Patent Office / Office européen des brevets

(11) **EP 2 937 536 A1**

(12) **EUROPEAN PATENT APPLICATION**
published in accordance with Art. 153(4) EPC

(43) Date of publication:
28.10.2015 Bulletin 2015/44

(51) Int Cl.:
*F01N 3/08* (2006.01)

(21) Application number: 12890409.1

(86) International application number:
PCT/JP2012/082800

(22) Date of filing: 18.12.2012

(87) International publication number:
WO 2014/097393 (26.06.2014 Gazette 2014/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: TOYOTA JIDOSHA KABUSHIKI
KAISHA
Toyota-shi, Aichi-ken, 471-8571 (JP)

(72) Inventor: ASAURA, Shinya
Toyota-shi
Aichi 471-8571 (JP)

(74) Representative: Smith, Samuel Leonard
J A Kemp
14 South Square
Gray's Inn
London WC1R 5JJ (GB)

(54) **EXHAUST PURIFICATION DEVICE FOR INTERNAL COMBUSTION ENGINE**

(57) An object of the present invention is to allow a supply amount of a reducing agent to be an appropriate amount in an exhaust gas purification apparatus for an internal combustion engine comprising a selective catalytic reduction catalyst which is arranged for an exhaust gas passage of the internal combustion engine and a supply device which supplies the reducing agent to the selective catalytic reduction catalyst. In order to achieve the object, the present invention resides in an exhaust gas purification apparatus for an internal combustion engine comprising a selective catalytic reduction catalyst which is arranged for an exhaust gas passage of the internal combustion engine and a supply device which supplies a reducing agent to the selective catalytic reduction catalyst, wherein an amount of the reducing agent supplied from the supply device is adjusted on the basis of such a characteristic that a multiplied value, which is obtained by multiplying a flow rate of an exhaust gas allowed to flow into the selective catalytic reduction catalyst per unit time and a concentration of the reducing agent contained in the exhaust gas allowed to flow out from the selective catalytic reduction catalyst, correlates with a surplus reducing agent amount.

[Fig. 5]

EP 2 937 536 A1

## Description

### TECHNICAL FIELD

The present invention relates to a technique for supplying a reducing agent to a selective catalytic reduction catalyst arranged for an exhaust gas passage of an internal combustion engine.

### BACKGROUND ART

An exhaust gas purification apparatus for an internal combustion engine is known, which comprises a selective catalytic reduction (SCR) catalyst and a supply device for supplying a reducing agent to the selective catalytic reduction catalyst. In relation to such an exhaust gas purification apparatus, a technique has been suggested, in which the amount of consumption of the reducing agent consumed by the selective catalytic reduction catalyst (amount of the reducing agent to contribute to the purification of $NO_X$) is calculated on the basis of the amount of $NO_X$ discharged from the internal combustion engine and the $NO_X$ purification rate of the selective catalytic reduction catalyst (see, for example, Patent Document 1). Further, Patent Document 1 describes a technique in which the amount of the reducing agent adsorbed to the selective catalytic reduction catalyst is calculated or computed on the basis of the amount of consumption of the reducing agent, and the amount of supply of the reducing agent is adjusted depending on the amount of adsorption of the reducing agent.

### PRIOR ART DOCUMENTS

#### Patent Documents

Patent Document 1: Japanese Patent Application Laid-Open No. 2003-293737

### DISCLOSURE OF THE INVENTION

#### Problem To Be Solved By The Invention

In the meantime, the amount of the reducing agent, which is adsorbed by the selective catalytic reduction catalyst, is changed in some cases depending on the temperature of the selective catalytic reduction catalyst and the flow rate of the exhaust gas allowed to pass through the selective catalytic reduction catalyst. Therefore, when the conventional technique described above is adopted, there is such a possibility that the amount of the reducing agent, which is supplied to the selective catalytic reduction catalyst, may be any inappropriate amount.

The present invention has been made taking the foregoing actual circumstances into consideration, an object of which is to provide such a technique that the supply amount of a reducing agent can be an appropriate amount in an exhaust gas purification apparatus for an internal combustion engine comprising a selective catalytic reduction catalyst which is arranged for an exhaust gas passage of the internal combustion engine and a supply device which supplies the reducing agent to the selective catalytic reduction catalyst.

#### Means For Solving The Problem

In order to achieve the object as described above, the present invention resides in an exhaust gas purification apparatus for an internal combustion engine comprising a selective catalytic reduction catalyst which is arranged for an exhaust gas passage of the internal combustion engine and a supply device which supplies a reducing agent to the selective catalytic reduction catalyst, wherein an amount of the reducing agent supplied from the supply device is adjusted on the basis of such a characteristic that a multiplied value, which is obtained by multiplying a flow rate of an exhaust gas allowed to flow into the selective catalytic reduction catalyst per unit time and a concentration of the reducing agent contained in the exhaust gas allowed to flow out from the selective catalytic reduction catalyst, correlates with a surplus reducing agent amount.

In particular, according to the present invention, there is provided an exhaust gas purification apparatus for an internal combustion engine, comprising:

a selective catalytic reduction catalyst which is arranged for an exhaust gas passage of the internal combustion engine;
a supply device which supplies a reducing agent to the selective catalytic reduction catalyst;
acquiring means which acquires a flow rate of an exhaust gas allowed to flow into the selective catalytic reduction catalyst per unit time;

measuring means which measures a concentration of the reducing agent contained in the exhaust gas allowed to flow out from the selective catalytic reduction catalyst; and

control means which computes a surplus reducing agent amount on the basis of the flow rate of the exhaust gas acquired by the acquiring means, the concentration measured by the measuring means, and such a relationship that the surplus reducing agent amount, which is an amount of the reducing agent that is not consumed for purification of $NO_x$ by the selective catalytic reduction catalyst, correlates with a multiplied value of the flow rate of the exhaust gas and the concentration so that an amount of the reducing agent supplied from the supply device is controlled by using the calculated surplus reducing agent amount as a parameter.

The "supply device", which is referred to herein, may supply the reducing agent, or the "supply device" may supply any substance (precursor of the reducing agent) which is to be changed to the reducing agent in the exhaust gas or the selective catalytic reduction catalyst.

The reducing agent, which is supplied from the supply device, is adsorbed by the selective catalytic reduction catalyst. A part of the reducing agent, which is adsorbed by the selective catalytic reduction catalyst, is consumed as the reducing agent for reducing $NO_x$ contained in the exhaust gas, for example, into nitrogen and water. Any surplus or excessive reducing agent, which is not consumed for the reduction of $NO_x$, is desorbed from the selective catalytic reduction catalyst, or it remains in the selective catalytic reduction catalyst.

However, when the supply device continuously supplies the reducing agent, the amount of the reducing agent (reducing agent consumption amount), which is consumed for the purification of $NO_x$ per unit time, is gradually increased. Further, the surplus reducing agent amount is gradually decreased, and the amount of the reducing agent (reducing agent desorption amount), which is desorbed from the selective catalytic reduction catalyst per unit time, is gradually increased. Then, if the added-up value of the supply amount of the reducing agent becomes not less than a predetermined amount, the surplus reducing agent amount and the reducing agent desorption amount are in an equilibrium state. When the equilibrium state as described above is established, the amount of the reducing agent, which is adsorbed by the selective catalytic reduction catalyst, is maintained to be a substantially constant amount (equilibrium adsorption amount).

Therefore, if the supply amount of the reducing agent is adjusted so that the amount of the reducing agent (reducing agent adsorption amount), which is adsorbed by the selective catalytic reduction catalyst, is equal to the equilibrium adsorption amount, it is possible to raise the $NO_x$ purification rate of the selective catalytic reduction catalyst, while suppressing the amount of the reducing agent desorbed from the selective catalytic reduction catalyst to be small.

In the meantime, the surplus reducing agent amount is changed depending on the space velocity (SV) provided when the exhaust gas passes through the selective catalytic reduction catalyst. For example, when the space velocity is high, the surplus reducing agent amount is increased as compared with when the space velocity is low. When the surplus reducing agent amount is large, then the reducing agent consumption amount is decreased, and the amount of the reducing agent desorbed from the selective catalytic reduction catalyst is increased, as compared with when the surplus reducing agent amount is small. Therefore, it is desirable that the supply amount of the reducing agent is corrected depending on the space velocity provided when the exhaust gas passes through the selective catalytic reduction catalyst.

As a result of the diligent experiment and the verification performed by the present inventors in response to the request as described above, the following knowledge has been obtained. That is, the surplus reducing agent amount correlates with the multiplied value of the space velocity which is provided when the exhaust gas passes through the selective catalytic reduction catalyst and the concentration of the reducing agent which is contained in the exhaust gas allowed to flow out from the selective catalytic reduction catalyst. Note that the space velocity, which is provided when the exhaust gas passes through the selective catalytic reduction catalyst, can be also replaced with the flow rate of the exhaust gas (exhaust gas flow rate) allowed to flow into the selective catalytic reduction catalyst per unit time.

Therefore, in the exhaust gas purification apparatus for the internal combustion engine of the present invention, the situation, in which the surplus reducing agent amount is excessively increased or the surplus reducing agent amount is excessively decreased, is avoided by adjusting the supply amount of the reducing agent by using, as the parameter, the multiplied value (surplus reducing agent amount) obtained by multiplying the exhaust gas flow rate which is acquired by the acquiring means and the reducing agent concentration which is measured by the measuring means.

In this context, the amount of the reducing agent supplied from the supply device may be controlled so that the surplus reducing agent amount is equal to a target surplus amount, or the amount of the reducing agent supplied from the supply device may be controlled so that the reducing agent adsorption amount is equal to a target adsorption amount.

The surplus reducing agent is desorbed from the selective catalytic reduction catalyst. Therefore, when the supply amount of the reducing agent is adjusted so that the surplus reducing agent amount is equal to the target surplus amount, the amount of the reducing agent, which is discharged from the selective catalytic reduction catalyst, can be suppressed to be small.

On the other hand, the $NO_x$ purification rate of the selective catalytic reduction catalyst is changed depending on the reducing agent adsorption amount. Therefore, when the supply amount of the reducing agent is controlled so that the reducing agent adsorption amount is equal to the target adsorption amount, the $NO_x$ purification rate of the selective catalytic reduction catalyst can be approximated to a desired $NO_x$ purification rate.

When the supply amount of the reducing agent is adjusted so that the reducing agent adsorption amount is equal to the target adsorption amount, it is necessary to specify the amount of the reducing agent which is actually adsorbed by the selective catalytic reduction catalyst. In this context, the selective catalytic reduction catalyst has such a characteristic that the surplus reducing agent amount is increased and the reducing agent adsorption amount is decreased when the temperature of the selective catalytic reduction catalyst is high as compared with when the temperature of the selective catalytic reduction catalyst is low. Therefore, the reducing agent adsorption amount can be determined from the temperature of the selective catalytic reduction catalyst and the surplus reducing agent amount. For example, assuming that Kd represents a coefficient based on the temperature of the selective catalytic reduction catalyst, the following expression (1) holds.

$$\text{Reducing agent adsorption amount} = (\text{Surplus reducing agent amount})/Kd...(1)$$

The coefficient Kd is the value which is changed depending on the specification of the selective catalytic reduction catalyst. However, the value, which is appropriate for the specification of the selective catalytic reduction catalyst, can be experimentally determined beforehand. Thus, the reducing agent adsorption amount can be calculated by substituting the surplus reducing agent amount calculated on the basis of the correlation into the expression (1).

When the supply amount of the reducing agent is adjusted so that the reducing agent adsorption amount, which is calculated in accordance with the method described above, is equal to the target adsorption amount, the $NO_x$ purification rate of the selective catalytic reduction catalyst can be approximated to the target $NO_x$ purification rate.

**Effects Of The Invention**

According to the present invention, the supply amount of the reducing agent can be made to be the appropriate amount in the exhaust gas purification apparatus for the internal combustion engine comprising the selective catalytic reduction catalyst which is arranged for the exhaust gas passage of the internal combustion engine and the supply device which supplies the reducing agent to the selective catalytic reduction catalyst.

**Brief Description Of The Drawings**

Fig. 1 shows a schematic arrangement of an intake/exhaust system of an internal combustion engine to which the present invention is applied.

Fig. 2 shows the time-dependent change of the ammonia inflow amount, the ammonia consumption amount, the surplus ammonia amount, the ammonia desorption amount, and the ammonia adsorption amount.

Fig. 3 shows the ratio between the surplus ammonia amount and the ammonia consumption amount provided when the exhaust gas flow rate is changed.

Fig. 4 shows the ratio between the surplus ammonia amount and the ammonia consumption amount provided when the addition amount of ammonia is corrected in accordance with the change of the exhaust gas flow rate.

Fig. 5 shows a flow chart illustrating a process routine to be executed by ECU when ammonia is added from an addition valve in a first embodiment.

Fig. 6 shows a flow chart illustrating a process routine to be executed by ECU when ammonia is added from an addition valve in a second embodiment.

**The Best Mode For Carrying Out The Invention**

An explanation will be made below on the basis of the drawings about a specified embodiment of the present invention. For example, the dimension or size, the material, the shape, and the relative arrangement of each of constitutive parts or components described in the embodiment of the present invention are not intended to limit the technical scope of the invention only thereto unless specifically noted.

**(First Embodiment)**

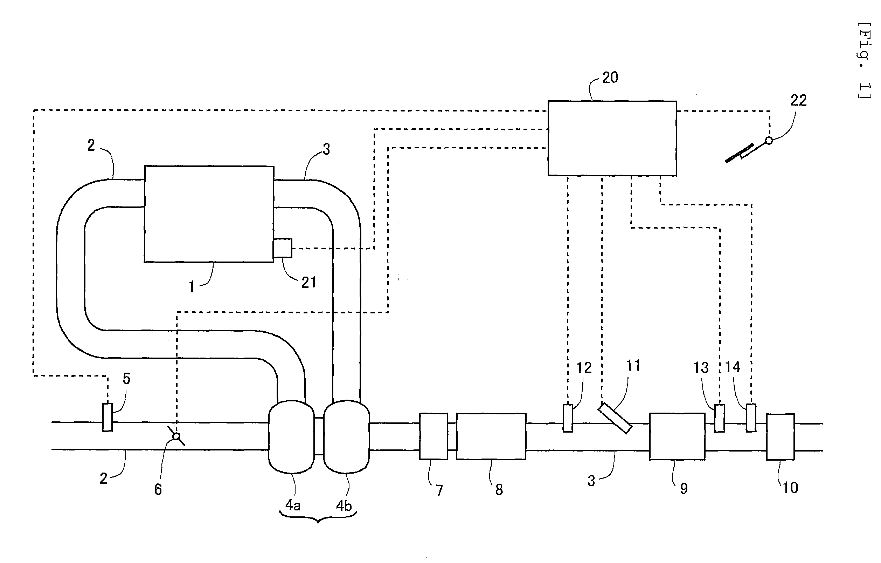

At first, an explanation will be made about a first embodiment of the present invention on the basis of Figs. 1 to 5. Fig. 1 shows a schematic arrangement of an intake/exhaust system of an internal combustion engine to which the present invention is applied. The internal combustion engine 1 shown in Fig. 1 is an internal combustion engine (diesel engine) of the compression ignition type. However, it is also allowable to use an internal combustion engine (gasoline engine) of the spark ignition type which is subjected to the lean burn (lean combustion) operation.

An intake gas passage 2 and an exhaust gas passage 3 are connected to the internal combustion engine 1. A compressor 4a and a turbine 4b of a centrifugal supercharger (turbo charger) 4 are arranged for the intake gas passage 2 and the exhaust gas passage 3 respectively.

An air flow meter 5 and a throttle valve 6 are provided for the intake gas passage 2 on the upstream side from the compressor 4a of the turbo charger 4. The air flow meter 5 is a sensor which detects the amount or quantity (mass) of the fresh air (air) allowed to flow through the intake gas passage 2. The throttle valve 6 is a valve mechanism which adjusts the amount of the air (intake air amount) allowed to flow through the intake gas passage 2.

An oxidation catalyst 7, a filter 8, an addition valve 11, a selective catalytic reduction catalyst 9 (hereinafter referred to as "SCR catalyst 9"), and an ammonia slip catalyst 10 are provided for the exhaust gas passage 3 on the downstream side from the turbine 4b of the turbo charger 4, in an order as referred to from the upstream side in the flow direction of the exhaust gas.

The filter 8 collects particulate matter (PM) contained in the exhaust gas. The oxidation catalyst 7 oxidizes, for example, hydrocarbon (HC) and carbon monoxide (CO) contained in the exhaust gas. Note that the oxidation catalyst 7 may be carried on the filter 8. Further, the oxidation catalyst 7 is not limited to one which has only the oxidizing function. For example, the oxidation catalyst 7 may be a three-way catalyst.

The SCR catalyst 9 is the catalyst which reduces $NO_x$ contained in the exhaust gas by using ammonia ($NH_3$) as the reducing agent. The addition valve 11 adds ammonia into the exhaust gas in order to supply ammonia as the reducing agent to the SCR catalyst 9. Note that the addition valve 11 may add a substance (precursor of ammonia) which is to be finally changed into ammonia. For example, the addition valve 11 may add an aqueous urea solution (urea-water solution). In this case, urea, which is added as the aqueous urea solution from the addition valve 11, is hydrolyzed by the heat of the exhaust gas, and urea is converted into ammonia.

In this embodiment, the addition valve 11 corresponds to the supply device according to the present invention. However, the substance, which is supplied from the supply device according to the present invention, is not limited to ammonia (or the ammonia precursor). It is also allowable to use any substance provided that the substance functions as the reducing agent to reduce $NO_x$ by the SCR catalyst. Further, the reducing agent, which is supplied from the supply device according to the present invention, may be in any one of the states of solid, liquid, and gas.

The ammonia slip catalyst 10 has the oxidizing function. Ammonia, which flows out from the SCR catalyst 9, is oxidized to $N_2$ by the ammonia slip catalyst 10. Accordingly, ammonia is suppressed from flowing out to the outside of the vehicle.

A $NO_x$ sensor 12 is provided for the exhaust gas passage 3 between the filter 8 and the addition valve 11. An exhaust gas temperature sensor 13 and an $NH_3$ sensor 14 are provided for the exhaust gas passage 3 between the SCR catalyst 9 and the ammonia slip catalyst 10. The $NO_x$ sensor 12 is the sensor which measures the concentration of $NO_x$ contained in the exhaust gas allowed to flow into the SCR catalyst 9. The exhaust gas temperature sensor 13 is the sensor which measures the temperature of the exhaust gas allowed to flow out from the SCR catalyst 9. The $NH_3$ sensor 14 is the sensor which measures the concentration of ammonia contained in the exhaust gas allowed to flow out from the SCR catalyst 9, and the $NH_3$ sensor 14 corresponds to the measuring means according to the present invention.

An electronic control unit (ECU) 20 is provided in combination with the internal combustion engine 1. ECU 20 is the unit which controls, for example, the operation state of the internal combustion engine 1. A crank position sensor 21 and an accelerator opening degree sensor 22 are electrically connected to ECU 20 in addition to the air flow meter 5, the $NO_x$ sensor 12, the exhaust gas temperature sensor 13, and the $NH_3$ sensor 14 described above. The crank position sensor 21 detects the crank angle of the internal combustion engine 1. The accelerator opening degree sensor 22 detects the accelerator opening degree of the vehicle which carries the internal combustion engine 1. Output signals of various sensors as described above are inputted into ECU 20.

Further, ECU 20 is electrically connected to various devices including, for example, the throttle valve 6 and the addition valve 11, and ECU 20 controls the various devices on the basis of the output signals of the various sensors. For example, ECU 20 controls the addition valve 11 so that the amount of ammonia supplied to the SCR catalyst 9 is an appropriate amount. A method for controlling the addition valve 11 according to this embodiment will be described below.

Ammonia, which is supplied from the addition valve 11 to the SCR catalyst 9, is adsorbed by the SCR catalyst 9. A part of ammonia, which is adsorbed by the SCR catalyst 9, is consumed as the reducing agent to reduce $NO_x$ contained in the exhaust gas to nitrogen ($N_2$) and water ($H_2O$). Further, any surplus ammonia, which is not consumed as the reducing agent, remains in the SCR catalyst 9. A part of ammonia, which remains in the SCR catalyst 9, is desorbed from the SCR catalyst 9 without being consumed for the reduction of $NO_x$. Desorbed ammonia flows out from the SCR catalyst 9, while maintaining the form of ammonia as it is, or after being oxidized to form $NO_x$, or after being reduced from $NO_x$ to form $N_2$.

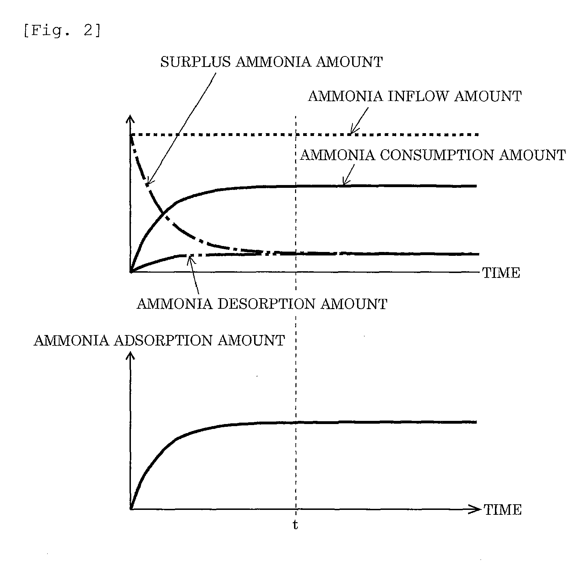

Fig. 2 shows the time-dependent change of the ammonia amount (ammonia inflow amount) which flows into the SCR catalyst 9 per unit time, the ammonia amount (ammonia consumption amount) which is consumed as the reducing agent per unit time by the SCR catalyst 9, the amount per unit time of ammonia (surplus ammonia amount) which remains in the SCR catalyst 9 without being consumed as the reducing agent, the amount of ammonia (ammonia desorption amount) which is desorbed from the SCR catalyst 9 per unit time, and the amount of ammonia (ammonia adsorption amount) which is adsorbed by the SCR catalyst 9, provided when the addition valve 11 continuously supplies a constant amount of ammonia.

As shown in Fig. 2, when the constant amount of ammonia is continuously supplied as starting from a state in which the ammonia adsorption amount of the SCR catalyst 9 is substantially zero, the ammonia consumption amount, the ammonia desorption amount, and the ammonia adsorption amount are gradually increased. On the other hand, the surplus ammonia amount is gradually decreased as the time elapses. When the added-up value of the supply amount of ammonia becomes not less than a predetermined amount (t in Fig. 2), the surplus ammonia amount and the ammonia desorption amount are substantially equal to one another (equilibrium state). When the surplus ammonia amount and the ammonia desorption amount are in the equilibrium state, then the ammonia consumption amount is a substantially constant amount (amount of $NO_x$ reduced per unit time is a substantially constant amount), and the amount of ammonia (ammonia adsorption amount) adsorbed by the SCR catalyst 9 is also a substantially constant amount. In the following description, the ammonia adsorption amount, which is provided when the surplus ammonia amount and the ammonia desorption amount are in the equilibrium state, is referred to as "equilibrium adsorption amount".

The amount of ammonia (ammonia supply amount), which is supplied from the addition valve 11 per unit time, is adjusted so that the surplus ammonia amount and the ammonia desorption amount are in the equilibrium state. In other words, the ammonia supply amount is adjusted so that the ammonia adsorption amount maintains the equilibrium adsorption amount. For example, when the ammonia adsorption amount arrives at the target adsorption amount (equilibrium adsorption amount), the ammonia supply amount is made to be equal to the sum total of the ammonia consumption amount and the ammonia desorption amount. When the ammonia supply amount is controlled as described above, it is possible to raise the $NO_x$ purification rate while suppressing the amount of ammonia allowed to flow out from the SCR catalyst 9 to be small.

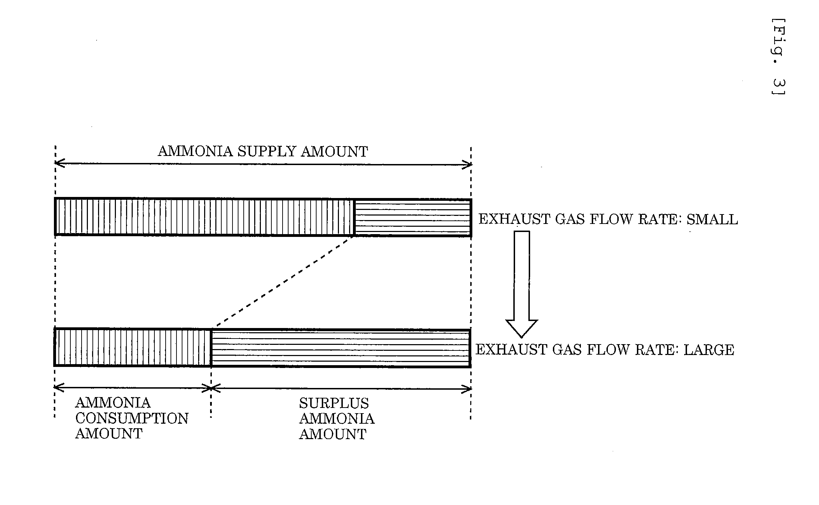

In the meantime, the surplus ammonia amount and the ammonia desorption amount are changed depending on the space velocity (SV) provided when the exhaust gas passes through the SCR catalyst 9. In other words, the surplus ammonia amount and the ammonia desorption amount are changed depending on the amount of the exhaust gas (exhaust gas flow rate) allowed to flow into the SCR catalyst per unit time. For example, as shown in Fig. 3, when the exhaust gas flow rate is large, then the surplus ammonia amount is increased, and the ammonia consumption amount is decreased, as compared with when the exhaust gas flow rate is small. As a result, there is such a possibility that the amount of ammonia allowed to flow out from the SCR catalyst 9 may be excessively increased.

In view of the above, in this embodiment, the addition amount is adjusted so that the surplus ammonia amount is equal to the target surplus amount. In this context, as a result of the diligent experiments and the verifications performed by the present inventors, such a knowledge has been obtained that the surplus ammonia amount correlates with the multiplied value of the amount of the exhaust gas (exhaust gas flow rate) allowed to flow into the SCR catalyst 9 per unit time and the concentration of ammonia contained in the exhaust gas allowed to flow out from the SCR catalyst 9.

That is, the following expression (2) holds assuming that the surplus ammonia amount is represented by $NH_3mass$, the exhaust gas flow rate is represented by Flw, and the ammonia concentration is represented by Cnh3.

$$NH_3mass = Flw * Cnh3 \quad ...(2)$$

In this case, the exhaust gas flow rate Flw is equivalent to the intake air amount of the internal combustion engine 1, unless the secondary air or the like is supplied in the exhaust gas passage 3 on the upstream side from the SCR catalyst 9. Therefore, the output signal of the air flow meter 5 can be used as the exhaust gas flow rate Flw. The output signal of the $NH_3$ sensor 14 can be used as the ammonia concentration Cnh3.

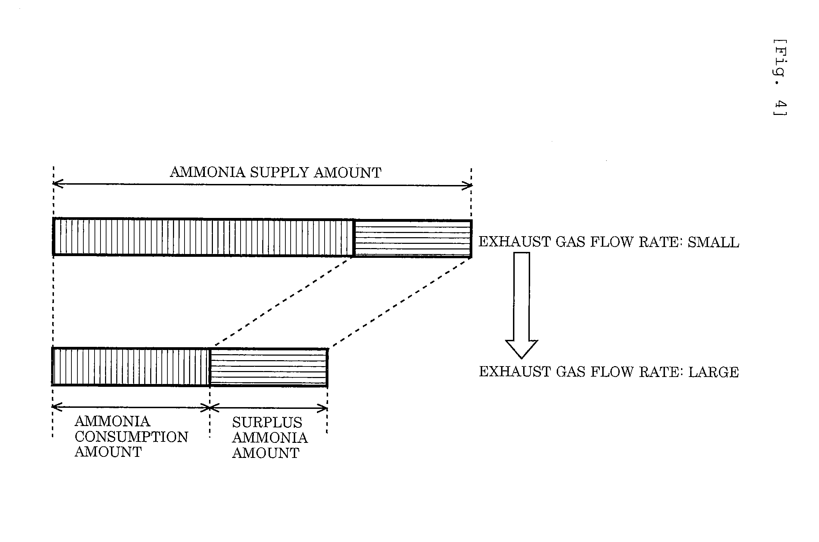

ECU 20 calculates the surplus ammonia amount $NH_3mass$ by substituting the output signal of the air flow meter 5 and the output signal of the $NH_3$ sensor 14 into the expression (2) described above. Then, ECU 20 judges whether or not the surplus ammonia amount $NH_3mass$ is equal to the target surplus amount. If the surplus ammonia amount $NH_3mass$ is different from the target surplus amount, the difference therebetween is used as the parameter to adjust (correct) the target addition amount of ammonia. For example, if the surplus ammonia amount $NH_3mass$ is larger than

the target surplus amount as in the example shown in Fig. 3 described above, ECU 20 subtracts the difference between the surplus ammonia amount $NH_3$mass and the target surplus amount (value obtained by subtracting the target surplus amount from the surplus ammonia amount $NH_3$mass) from the target addition amount of ammonia. When the ammonia addition amount is adjusted in accordance with the method as described above, the surplus ammonia amount can be made to be the target surplus amount, even when the exhaust gas flow rate is increased as shown in Fig. 4.

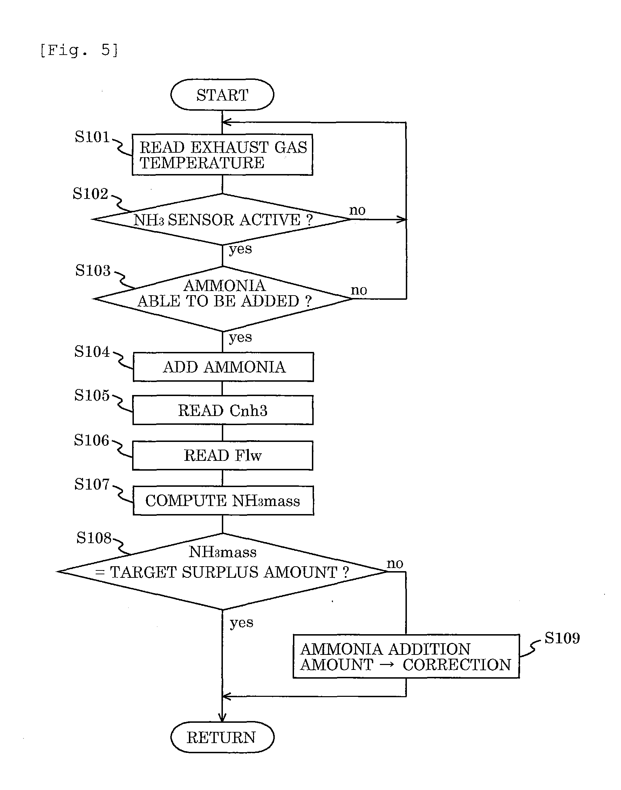

An explanation will be made below with reference to Fig. 5 about a control procedure for the ammonia addition amount in this embodiment. Fig. 5 shows a flow chart illustrating a process routine to be executed by ECU 20 when ammonia is added from the addition valve 11. This process routine is previously stored in ROM of ECU 20, and the process routine is periodically executed by ECU 20.

In the process routine shown in Fig. 5, ECU 20 firstly reads the output signal (exhaust gas temperature) of the exhaust gas temperature sensor 13 in the process of S101.

In the process of S102, ECU 20 judges whether or not the exhaust gas temperature read in the process of S101 is within an active temperature range of the $NH_3$ sensor 14. If the negative judgment is made in the process of S102, ECU 20 returns to S101. If the affirmative judgment is made in the process of S102, ECU 20 proceeds to the process of S103.

In the process of S103, ECU 20 judges whether or not such a state is given that ammonia can be added from the addition valve 11. That is, ECU 20 judges whether or not the exhaust gas temperature, which is read in the process of S101, is within an active temperature range of the SCR catalyst 9. If the negative judgment is made in the process of S103, ECU 20 returns the process of S101. If the affirmative judgment is made in the process of S103, then ECU 20 proceeds to the process of S104, and ECU 20 controls the addition valve 11 so that ammonia in a target addition amount is added.

In the process of S105, ECU 20 reads the output signal of the $NH_3$ sensor 14 (ammonia concentration Cnh3).

In the process of S106, ECU 20 reads the output signal of the air flow meter 5 (exhaust gas flow rate Flw). The acquiring means according to the present invention is realized by the execution of the process of S106 by ECU 20.

In the process of S107, ECU 20 calculates the surplus ammonia amount $NH_3$mass by substituting the ammonia concentration Cnh3 read in the process of S105 and the exhaust gas flow rate Flw read in the process of S106 into the expression (2) described above.

In the process of S108, ECU 20 judges whether or not the surplus ammonia amount $NH_3$mass, which is calculated in the process of S107, is equal to the target surplus amount. Note that in the process of S108, it is also allowable that ECU 20 judges that the surplus ammonia amount $NH_3$mass is equal to the target surplus amount, if the difference between the surplus ammonia amount $NH_3$mass and the target surplus amount is not more than a preset allowable value.

If the affirmative judgment is made in the process of S108, ECU 20 once completes the execution of this routine. If the negative judgment is made in the process of S108, then ECU 20 proceeds to the process of S109, and ECU 20 corrects the ammonia addition amount. In particular, if the surplus ammonia amount $NH_3$mass is larger than the target surplus amount, ECU 20 subtracts the difference between the surplus ammonia amount $NH_3$mass and the target surplus amount (amount obtained by subtracting the target surplus amount from the surplus ammonia amount $NH_3$mass) from the target addition amount. On the other hand, if the surplus ammonia amount $NH_3$mass is smaller than the target surplus amount, ECU 20 adds the difference between the surplus ammonia amount $NH_3$mass and the target surplus amount (amount obtained by subtracting the surplus ammonia amount $NH_3$mass from the target surplus amount) to the target addition amount. When the target addition amount is corrected in accordance with the method as described above, if the exhaust gas flow rate Flw is changed, then the surplus ammonia amount $NH_3$mass can be made equivalent to the target surplus amount. As a result, it is possible to avoid such a situation that the amount of ammonia allowed to flow out from the SCR catalyst 9 is excessively increased.

The control means according to the present invention is realized by the execution of the processes of S107 and S108 by ECU 20.

According to the embodiment described above, even when the exhaust gas flow rate Flw is changed, it is possible to adjust the ammonia addition amount so that the surplus ammonia amount $NH_3$mass is equal to the target surplus amount. As a result, it is possible to avoid such a situation that the amount of ammonia allowed to flow out from the SCR catalyst 9 is excessively increased.

**(Second Embodiment)**

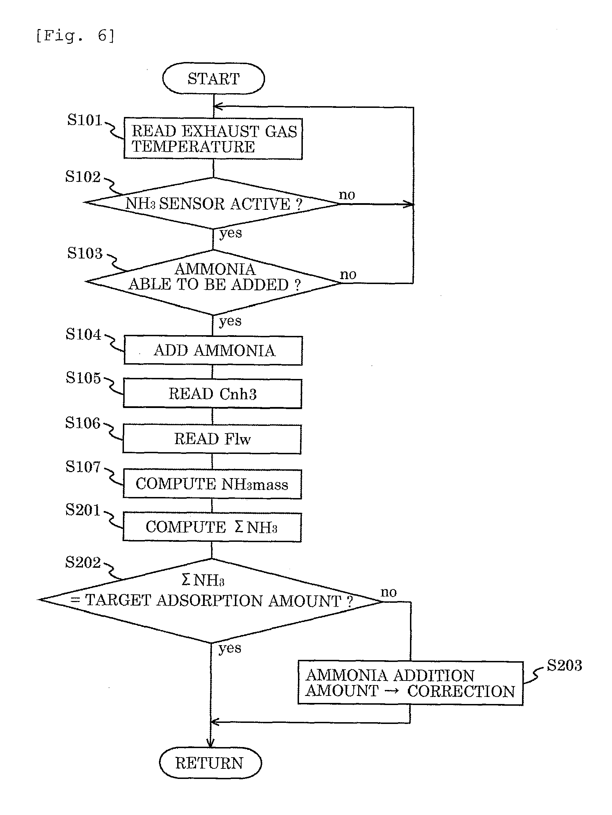

Next, an explanation will be made on the basis of Fig. 6 about a second embodiment of the present invention. In this section, the construction, which is different from that of the first embodiment described above, will be explained, and the construction, which is the same as or equivalent to that of the first embodiment described above, will be omitted from the explanation.

In the first embodiment described above, the example has been described, in which the addition amount of ammonia is adjusted so that the surplus ammonia amount is equal to the target surplus amount. However, in this embodiment, an example will be explained, in which the addition amount of ammonia is adjusted so that the ammonia adsorption amount of the SCR catalyst 9 is equal to a target adsorption amount.

There is such a tendency that the surplus ammonia amount is increased when the exhaust gas flow rate is large as compared with when the exhaust gas flow rate is small. In the same manner as the surplus ammonia amount, there is such a tendency that the ammonia adsorption amount is increased when the exhaust gas flow rate is large as compared with when the exhaust gas flow rate is small. In other words, the surplus ammonia amount and the ammonia adsorption amount exhibit the same or equivalent tendency (proportional relation) in relation to the exhaust gas flow rate.

However, in relation to the temperature of the SCR catalyst 9 (bed temperature), the surplus ammonia amount and the ammonia adsorption amount exhibit different tendencies. That is, there are such tendencies that the surplus ammonia amount is increased but the ammonia adsorption amount is decreased when the temperature of the SCR catalyst 9 is high as compared with when the temperature of the SCR catalyst 9 is low. Taking the tendencies into consideration, the following expression (3) holds. In the expression (3), $\Sigma NH_3$ represents the ammonia adsorption amount, and Kd represents a coefficient corresponding to the temperature of the SCR catalyst 9.

$$\Sigma NH_3 = NH_3 mass/Kd...(3)$$

In this procedure, the coefficient Kd resides in the value which is determined so that the higher the temperature of the SCR catalyst 9 is, the smaller the ammonia adsorption amount $\Sigma NH_3$ is. In particular, the coefficient Kd is such a coefficient that the higher the temperature of the SCR catalyst 9 is, the larger the value is. The coefficient Kd as described above is changed depending on the specification of the SCR catalyst 9. However, the coefficient Kd, which is appropriate for the specification of the SCR catalyst 9 arranged for the exhaust gas passage 3 of the internal combustion engine 1, can be previously determined by means of an adaptation process based on the use of an experiment or the like. Thus, in this embodiment, it is assumed that a map (hereinafter referred to as "coefficient map"), in which the relationship between the temperature of the SCR catalyst 9 and the coefficient Kd is defined, is previously determined, and the coefficient map is stored beforehand in ROM of ECU 20. Note that the temperature of the SCR catalyst 9 correlates with the temperature of the exhaust gas allowed to flow out from the SCR catalyst 9. Therefore, it is also allowable that the output signal of the exhaust gas temperature sensor 13 is used as the temperature of the SCR catalyst 9. Further, it is also allowable that the temperature of the SCR catalyst 9 is computed from the operation state of the internal combustion engine 1 (for example, the intake air amount, the fuel injection amount, and the number of revolutions of the engine).

According to the method as described above, it is possible to determine the actual ammonia adsorption amount $\Sigma NH_3$. Then, ECU 20 compares the actual ammonia adsorption amount $\Sigma NH_3$ with the target adsorption amount to appropriately correct the addition amount of ammonia depending on the difference therebetween. In particular, if the actual ammonia adsorption amount $\Sigma NH_3$ is larger than the target adsorption amount, ECU 20 appropriately subtracts the difference between the ammonia adsorption amount $\Sigma NH_3$ and the target adsorption amount (value obtained by subtracting the target adsorption amount from the ammonia adsorption amount $\Sigma NH_3$) from the target addition amount. On the other hand, if the actual ammonia adsorption amount $\Sigma NH_3$ is smaller than the target adsorption amount, ECU 20 appropriately adds the difference between the ammonia adsorption amount $\Sigma NH_3$ and the target adsorption amount (value obtained by subtracting the ammonia adsorption amount $\Sigma NH_3$ from the target adsorption amount) to the target addition amount.

When the addition amount of ammonia is adjusted (corrected) in accordance with the method as described above, even if the exhaust gas flow rate and/or the temperature of the SCR catalyst 9 is/are changed, then the actual ammonia adsorption amount $\Sigma NH_3$ can be approximated to the target adsorption amount (for example, the equilibrium adsorption amount). As a result, the $NO_x$ purification rate of the SCR catalyst 9 can be also approximated to a desired $NO_X$ purification rate.

An explanation will be made below with reference to Fig. 6 about a control procedure for the ammonia addition amount in this embodiment. Fig. 6 shows a flow chart illustrating a process routine to be executed by ECU 20 when ammonia is added from the addition valve 11. This process routine is previously stored in ROM of ECU 20, and the process routine is periodically executed by ECU 20. Note that equivalent reference numerals are affixed in Fig. 6 in relation to the processes which are the same as or equivalent to those of the process routine shown in Fig. 5 described above.

In the process routine shown in Fig. 6, ECU 20 executes the process of S201 after the execution of the process of S107. In the process of S201, ECU 20 determines the coefficient Kd which is appropriate for the temperature of the SCR catalyst 9, on the basis of the exhaust gas temperature (temperature of the SCR catalyst 9) read in the process of S101 and the coefficient map described above. ECU 20 computes the actual ammonia adsorption amount $\Sigma NH_3$ by substituting the surplus ammonia amount $NH_3 mass$ calculated in the process of S107 and the coefficient Kd into the expression (3) described above.

ECU 20 proceeds to the process of S202 after the execution of the process of S201, and ECU 20 judges whether or not the ammonia adsorption amount $\Sigma NH_3$ calculated in the process of S201 is equal to the target adsorption amount. In this procedure, it is also allowable that ECU 20 judges that the ammonia adsorption amount $\Sigma NH_3$ is equal to the target adsorption amount on condition that the difference between the ammonia adsorption amount $\Sigma NH_3$ and the target adsorption amount is not more than an allowable value.

If the affirmative judgment is made in the process of S202, ECU 20 once completes the execution of this routine. On the other hand, if the negative judgment is made in the process of S202, ECU 20 proceeds to the process of S203 to correct the addition amount of ammonia (target addition amount). For example, if the ammonia adsorption amount $\Sigma NH_3$ is larger than the target adsorption amount, ECU 20 subtracts the difference between the ammonia adsorption amount $\Sigma NH_3$ and the target adsorption amount (value obtained by subtracting the target adsorption amount from the ammonia adsorption amount $\Sigma NH_3$) from the target addition amount. On the other hand, if the ammonia adsorption amount $\Sigma NH_3$ is smaller than the target adsorption amount, ECU 20 adds the difference between the ammonia adsorption amount $\Sigma NH_3$ and the target adsorption amount (value obtained by subtracting the ammonia adsorption amount $\Sigma NH_3$ from the target adsorption amount) to the target addition amount.

According to the embodiment described above, even when the exhaust gas flow rate Flw and/or the temperature of the SCR catalyst 9 is/are changed, the ammonia adsorption amount $\Sigma NH_3$ can be approximated to the target adsorption amount. As a result, the $NO_X$ purification rate of the SCR catalyst 9 can be approximated to a desired $NO_X$ purification rate.

The first embodiment and the second embodiment described above can be appropriately combined with each other. It is also allowable that the addition amount of ammonia is corrected so that the ammonia adsorption amount $\Sigma NH_3$ is equal to the target adsorption amount, for example, during the high load operation in which the amount of $NO_X$ discharged from the internal combustion engine 1 tends to be increased. Further, it is also allowable that the addition amount of ammonia is corrected so that the surplus ammonia amount $NH_3$mass is equal to the target surplus amount when the travel velocity of a vehicle which carries the internal combustion engine 1 is small or when the vehicle stops.

**Description Of The Reference Numerals And Symbols**

1: internal combustion engine
2: intake gas passage
3: exhaust gas passage
4: turbo charger
5: air flow meter
6: throttle valve
7: oxidation catalyst
8: filter
9: SCR catalyst
10: ammonia slip catalyst
11: addition valve
12: $NO_X$ sensor
13: exhaust gas temperature sensor
14: $NH_3$ sensor
20: ECU
21: crank position sensor
22: accelerator opening degree sensor.

**Claims**

1. An exhaust gas purification apparatus for an internal combustion engine, comprising:

a selective catalytic reduction catalyst which is arranged for an exhaust gas passage of the internal combustion engine;
a supply device which supplies a reducing agent or another reducing agent as a precursor of the reducing agent to the selective catalytic reduction catalyst;
acquiring means which acquires a flow rate of an exhaust gas allowed to flow into the selective catalytic reduction catalyst per unit time;

measuring means which measures a concentration of the reducing agent contained in the exhaust gas allowed to flow out from the selective catalytic reduction catalyst; and

control means which computes a surplus reducing agent amount on the basis of the flow rate of the exhaust gas acquired by the acquiring means, the concentration of the reducing agent measured by the measuring means, and such a relationship that the surplus reducing agent amount, which is an amount of the reducing agent that is not consumed for purification of $NO_X$ by the selective catalytic reduction catalyst, correlates with a multiplied value of the flow rate of the exhaust gas and the concentration of the reducing agent so that a supply amount of the reducing agent is adjusted by using the calculated surplus reducing agent amount as a parameter.

2. The exhaust gas purification apparatus for the internal combustion engine according to claim 1, wherein the control means adjusts the supply amount of the reducing agent so that the surplus reducing agent amount is equal to a target surplus reducing agent amount.

3. The exhaust gas purification apparatus for the internal combustion engine according to claim 1, further comprising:

detecting means which detects a temperature that correlates with a temperature of the selective catalytic reduction catalyst, wherein:

the control means computes an adsorption amount of the reducing agent on the basis of such a characteristic that the surplus reducing agent amount is increased and the adsorption amount of the reducing agent, which is an amount of the reducing agent adsorbed by the selective catalytic reduction catalyst, is decreased when the temperature detected by the detecting means is high as compared with when the temperature detected by the detecting means is low, and the control means adjusts the supply amount of the reducing agent so that the calculated adsorption amount of the reducing agent is equal to a target adsorption amount of the reducing agent.

[Fig. 1]

[Fig. 2]

SURPLUS AMMONIA AMOUNT

AMMONIA INFLOW AMOUNT

AMMONIA CONSUMPTION AMOUNT

TIME

AMMONIA DESORPTION AMOUNT

AMMONIA ADSORPTION AMOUNT

TIME

t

[Fig. 3]

EP 2 937 536 A1

AMMONIA SUPPLY AMOUNT

EXHAUST GAS FLOW RATE: SMALL

EXHAUST GAS FLOW RATE: LARGE

AMMONIA CONSUMPTION AMOUNT

SURPLUS AMMONIA AMOUNT

[Fig. 4]

[Fig. 5]

```
                    ┌──────────┐
                    │  START   │
                    └────┬─────┘
                         │
S101 ┌───────────────────────────┐
     │ READ EXHAUST GAS          │
     │ TEMPERATURE               │
     └─────────────┬─────────────┘
                   │
S102        ◇───────────────◇     no
          <  NH₃ SENSOR ACTIVE ? >──────────►
            ◇───────────────◇
                   │ yes
                   │
S103      ◇─────────────────◇   no
        <    AMMONIA           >──────────►
          <  ABLE TO BE ADDED ? >
            ◇─────────────────◇
                   │ yes
S104 ┌───────────────────────────┐
     │      ADD AMMONIA          │
     └─────────────┬─────────────┘
S105 ┌───────────────────────────┐
     │      READ Cnh3            │
     └─────────────┬─────────────┘
S106 ┌───────────────────────────┐
     │      READ Flw             │
     └─────────────┬─────────────┘
S107 ┌───────────────────────────┐
     │   COMPUTE NH3mass         │
     └─────────────┬─────────────┘
S108        ◇───────────────◇
          <    NH₃mass          >  no
          < = TARGET SURPLUS AMOUNT ? >──────►
            ◇───────────────◇
                   │ yes           ┌──────────────────────┐
                   │               │ AMMONIA ADDITION     │ S109
                   │               │ AMOUNT → CORRECTION  │
                   │               └──────────────────────┘
                   ▼
              ┌──────────┐
              │  RETURN  │
              └──────────┘
```

[Fig. 6]

```
                        ┌─────────────┐
                        │    START    │
                        └─────────────┘
                               │
        S101 ┌──────────────────────────────┐
             │ READ EXHAUST GAS             │
             │ TEMPERATURE                  │
             └──────────────────────────────┘
                               │
        S102          ◇ NH₃ SENSOR ACTIVE ?  ──── no ──►
                               │ yes
        S103          ◇ AMMONIA
                        ABLE TO BE ADDED ?  ──── no ──►
                               │ yes
        S104 ┌──────────────────────────────┐
             │        ADD AMMONIA           │
             └──────────────────────────────┘
                               │
        S105 ┌──────────────────────────────┐
             │        READ Cnh3             │
             └──────────────────────────────┘
                               │
        S106 ┌──────────────────────────────┐
             │        READ Flw              │
             └──────────────────────────────┘
                               │
        S107 ┌──────────────────────────────┐
             │     COMPUTE NH3mass          │
             └──────────────────────────────┘
                               │
        S201 ┌──────────────────────────────┐
             │     COMPUTE Σ NH₃            │
             └──────────────────────────────┘
                               │
        S202     ◇ Σ NH₃
                   = TARGET ADSORPTION AMOUNT ? ── no ──┐
                               │ yes                     │
                               │              S203 ┌──────────────────────┐
                               │                   │ AMMONIA ADDITION     │
                               │                   │ AMOUNT → CORRECTION  │
                               │                   └──────────────────────┘
                               │◄─────────────────────────┘
                        ┌─────────────┐
                        │   RETURN    │
                        └─────────────┘
```

**INTERNATIONAL SEARCH REPORT**

| | International application No. |
|---|---|
| | PCT/JP2012/082800 |

A. CLASSIFICATION OF SUBJECT MATTER
*F01N3/08*(2006.01)i

According to International Patent Classification (IPC) or to both national classification and IPC

B. FIELDS SEARCHED

Minimum documentation searched (classification system followed by classification symbols)
F01N3/08

Documentation searched other than minimum documentation to the extent that such documents are included in the fields searched
Jitsuyo Shinan Koho        1922–1996   Jitsuyo Shinan Toroku Koho   1996–2013
Kokai Jitsuyo Shinan Koho   1971–2013   Toroku Jitsuyo Shinan Koho   1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2010-112345 A  (Mitsubishi Motors Corp.),<br>20 May 2010 (20.05.2010),<br>fig. 5; paragraph [0035]<br>(Family: none) | 1-2<br>3 |
| X<br>A | JP 2012-189007 A  (Honda Motor Co., Ltd.),<br>04 October 2012 (04.10.2012),<br>fig. 2; paragraph [0052]<br>(Family: none) | 1-2<br>3 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 January, 2013 (31.01.13) | 12 February, 2013 (12.02.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/082800

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The inventions of claims 1-2 cannot be considered to be novel in the light of the invention disclosed in the document 1, and have no special technical feature.
    Further, the invention of claim 1 cannot be considered to be novel in the light of the invention disclosed in the document 2, and does not have a special technical feature.
    Therefore, two inventions (invention groups) each having a special technical feature indicated below are involved in claims.
(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2012/082800

Continuation of Box No.III of continuation of first sheet(2)

Meanwhile, the inventions of claims 1-2, which have no special technical feature, are classified into invention 1.
(Invention 1) the inventions of claims 1-2
(Invention 2) the invention of claim 3

Form PCT/ISA/210 (extra sheet) (July 2009)

**EP 2 937 536 A1**

**Patent documents cited in the description**

- JP 2003293737 A